# FASCICULE DE BREVET EUROPEEN

(11) **EP 1 900 469 B1**
(45) Date de publication et mention de la délivrance du brevet: **21.07.2010**
(21) Numéro de dépôt: 07301298.1
(22) Date de dépôt: 08.08.2007
(51) Int. Cl.: B23K 26/14, B23K 26/20

(54) **Soudage laser à distance avec envoi d'argon liquide en tant qu'atmosphère protectrice**
Fernlaserstrahlschweißen mit Zuführung von flüssigem Argon als Schutzatmosphäre
Remote laser welding with sending of liquid argon as a protective atmosphere

(30) Priorité: 14.09.2006 FR 0653727
(43) Date de publication de la demande: 19.03.2008
(73) Titulaire: L'AIR LIQUIDE, Société Anonyme pour l'Etude et l'Exploitation des Procédés Georges Claude, 75007 Paris (FR)
(72) Inventeur: Matile, Olivier, 92250 La Garenne Colombes (FR); Belot, Dominique, 78150 Le Chesnay (FR)
(74) Mandataire: Pittis, Olivier

(56) Documents cités:
- EP-A- 1 356 890
- EP-A- 1 481 752
- EP-A- 1 707 305
- US-A- 5 782 253

## Description

L'invention porte sur un procédé de soudage laser conformément au préambule de la revendication 1 (voir, par example, EP-A-1356 890), en particulier soudage laser à distance", dans lequel on met en oeuvre une protection gazeuse améliorée de la zone de soudage.

Du fait de l'évolution technique de la qualité des faisceaux des lasers CO₂, c'est-à-dire les lasers à diffusion, et des lasers solides, tels les lasers Nd :YAG à barreau ou à disque avec fibres de 200 µm, il est possible d'utiliser des optiques de soudage à grandes distances focales, par exemple d'environ 1 à 1,6 m pour les laser de type CO₂ ou de 200 à 500 mm environ pour les lasers de type Nd :YAG.

De telles optiques permettent de souder en dirigeant le faisceau, d'une façon quasi instantanée, entre les cordons à réaliser, avec une accessibilité sur des volumes de travail importants.

En d'autres termes, le soudage à distance se différencie du soudage classique en ce que le déplacement du faisceau laser ne se fait pas via un chemin optique conventionnel mais par le biais d'un ou plusieurs miroirs oscillants situés directement en sortie de l'optique de focalisation, lesquels permettent de diriger le faisceau là où on le souhaite.

Le soudage "à distance" ou *remote welding* en anglais peut être utilisé pour souder différents matériaux, tels que les aciers au carbone, les aciers inoxydables, l'aluminium et ses alliages...

Les assemblages réalisés ainsi peuvent être soudés en bord à bord jointifs, par transparence ou à clin.

L'avantage est de pouvoir réaliser des cordons de longueur et de formes variables, par exemple circulaires, rectangulaires ou autres, à des vitesses de soudage de l'ordre de 10 à 20 m/min, et des vitesses entre les différents cordons de l'ordre de 1200 m/min.

En soudage à distance, comme dans tous les procédés de soudage, il est nécessaire de protéger le métal fondu contre l'oxydation de l'air ambiant et/ou l'introduction d'azote formant des porosités dans le cordon.

Or, en soudage à distance, l'apport traditionnel de gaz avec une buse latérale ou coaxiale au faisceau laser est impossible étant donné les vitesses importantes de translation entre les cordons et de la possibilité de souder dans des zones avec peu d'accessibilité.

Pour des cordons simples, il existe des systèmes de protection utilisant des buses plates distribuant de l'argon ou hélium qui sont généralement spécifiques de la forme du cordon.

Toutefois, du fait des conditions de distribution industrielles du gaz (variation de pression, de débits, ...) et des instabilités du procédé, les écoulements gaz deviennent instables, ce qui induit une expulsion du métal liquide du capillaire qui vient colmater l'apport de gaz.

De plus, la forme géométrique des apports de gaz nécessite une consommation de gaz importante, ce qui nuit à la rentabilité globale du procédé.

Pour tenter de remédier à ses problèmes, plusieurs solutions ont déjà été proposées mais celles-ci n'apportent pas une totale satisfaction.

Ainsi, le document EP-A-1481752 décrit un procédé de soudage laser à distance utilisant un gaz froid qui peut être de l'argon ou de l'hélium à une température inférieure à 0°C en tant que gaz de protection.

Le document EP-A-1356890 enseigne, quant à lui, un procédé de soudage ou coupage laser ou à l'arc, dans lequel les projections de métal fondu sont refroidies par contact avec un fluide froid, tel de l'argon liquide, de manière à éviter que ces projections ne puissent adhérer à la surface des pièces.

Le document US-A-5,782,253 décrit un procédé pour éliminer un revêtement d'un substrat selon lequel le revêtement à éliminer est d'abord pyrolysé puis éliminer par envoi d'un fluide froid sous pression comprenant notamment des particules de CO₂.

Par ailleurs, le document WO-A-99/8830 enseigne un procédé de soudage laser mettant en oeuvre de l'azote liquide à une température comprise entre -100°C et -200 °C avec envoi subséquent d'argon gazeux refroidi au contact d'azote liquide.

En outre, le document EP-A-464392 décrit un soudage laser utilisant de l'argon ou de l'hélium gazeux à une température entre 0 et -120 °C éventuellement additionné de CO₂, O₂ ou N₂.

Enfin, EP-A-1707305 décrit un refroidissement du cordon par de l'azote ou de l'argon en soudage notamment en soudage laser.

Le problème à résoudre est donc d'améliorer les procédés connus de soudage laser, en particulier de soudage laser à distance, de manière à obtenir une protection gazeuse efficace de la zone de soudage, c'est-à-dire stable et ne conduisant pas à des projections de métal aussi importantes qu'avec les procédés connus et permettant, en outre, de réduire les consommations de gaz.

Une solution de l'invention est un procédé de soudage par faisceau laser, en particulier de soudage à distance (remote welding), d'au moins une pièce métallique dans lequel on met en oeuvre une protection gazeuse de la zone de soudage obtenue par distribution d'argon à l'état liquide, où préalablement à la distribution de l'argon liquide, on opère une étape de balayage de la zone de soudage avec de l'argon à une température comprise entre 0 et 60 °C de manière à chasser au moins une partie de l'air et de l'humidité ambiante au-dessus de la zone de soudage.

Selon le cas, le procédé de l'invention peut comprendre l'une ou plusieurs des caractéristiques suivantes :
- le gaz neutre est à sa température de condensation à l'état liquide ou à une température inférieure à ladite température de condensation dudit gaz neutre.
- l'argon liquide est distribué en un flux laminaire.
- l'argon est distribué sous forme de gouttelettes d'argon liquide.
- l'argon liquide est distribué sur et/ou autour du cordon de soudure en cours de réalisation.
- l'argon liquide est distribué par une buse plate.
- l'argon est distribué sous forme de gouttelettes d'argon liquide sur une portion du trajet du faisceau laser.
- le balayage de la zone de soudage est opéré avec de l'argon gazeux à une température comprise entre 5 C° et 40 C°.
- on soude plusieurs pièces métalliques et/ou au moins une partie des pièces est en acier carbone, en acier inoxydable, en aluminium ou en un de leurs alliages.
- la protection est obtenue par distribution d'argon liquide refroidi à une température entre 220 et 85 K environ mesurée dans ladite zone de soudage.

La solution de l'invention implique donc de réaliser une amenée de gaz spécifique, à savoir d'argon, avec par exemple une buse plate autour du cordon, et surtout d'argon à l'état liquide pour le rendre plus dense et visqueux de façon à ce qu'il s'étale mieux sur le cordon.

On peut refroidir l'argon liquide jusqu'aux environs de sa température de condensation où sa densité sera d'environ 4 fois plus dense que l'air.

Le procédé conforme à l'invention consiste à :
- d'abord souffler un flux d'argon « chaud », c'est-à-dire approximativement à la température de la pièce soudée ou présentant une différence de température peu importante avec celle-ci, par exemple à la température ambiante, de manière rasante au-dessus de la pièce pour chasser l'air et les impuretés ambiantes, et éviter ainsi la condensation de l'eau dans l'étape suivante,
- puis à souffler de l'argon liquide, donc plus « froid », c'est-à-dire à une température suffisamment basse pour que la densité de l'argon liquide au voisinage du cordon de soudure soit au moins le double de celle de l'air à température ambiante.

L'argon liquide est soufflé en mode laminaire rasant près des cordons de soudure au moyen de buses plates pouvant avoir une dimension et une forme spécifiques au type de cordon.

La température de l'argon en contact avec le cordon de soudure et la pièce est préférentiellement contrôlée de façon à ne pas descendre en-dessous des limites imposées par le maintien des propriétés mécaniques des matériaux.

En outre, l'argon «chaud» et l'argon « froid » peuvent provenir d'une même source d'argon ou de sources différentes. Ainsi, l'argon « chaud » peut résulter d'un réchauffement à température ambiante et donc d'une vaporisation d'argon « froid » sous forme liquide.

Une autre possibilité est d'amener un filet de gouttelettes d'argon liquide sur le chemin du faisceau au moyen d'une buse cryogénique. L'évaporation de l'argon et la mobilité des gouttes, créent alors une protection totale.

Ceci ne peut, bien entendu, s'appliquer qu'aux métaux résistants à des températures cryogéniques.

En effet, en procédant ainsi, lorsqu'il existe une différence de température de 10°C et plus entre une surface plane et un liquide cryogénique, et il se forme alors une couche de caléfaction stable entre la surface et le liquide cryogénique. La couche de caléfaction est une couche gazeuse s'intercalant entre la surface et le liquide cryogénique qui reste supportée par la couche gazeuse.

Une autre possibilité, selon la forme de la pièce, est d'entourer la pièce par un manchon serré, en acier inoxydable par exemple, maintenant une bonne étanchéité autour de la pièce et de verser doucement l'argon liquide sur la pièce jusqu'à obtenir une caléfaction stable.

Encore une autre possibilité consiste à mettre les pièces à souder dans une boîte sans couvercle dont la hauteur de dépassement des bords par rapport à la surface à souder est à choisir au cas par cas de manière à obtenir un soufflage laminaire rasant d'argon à la température ambiante qui puisse chasser suffisamment l'air du fait de la différence de densité entre ces gaz et ensuite obtenir une protection gazeuse suffisante.

De façon générale, deux cas peuvent se présenter :
- la durée du soudage est très courte et la différence de température restera toujours supérieure à 10°C, alors dans ce cas aucun moyen de réchauffage n'est nécessaire,
- si la durée du soudage fait que la température de peau de la pièce descende proche de la température de l'argon liquide, il faudra prévoir un moyen de chauffage pour maintenir une variation de température d'au maximum 10°C.

Dans le cadre de l'invention, le générateur laser peut être à gaz, c'est-à-dire de type laser CO₂, ou solide de type Nd :YAG, à disque, à fibre ou autre. Préférentiellement, avec un laser CO₂, on peut mettre en oeuvre une longueur focale de l'ordre de 1500 mm et une vitesse de déplacement de l'ordre de 700 m/min. Par ailleurs, avec un laser de type Nd:YAG et un robot de soudage, la surface de travail est modulable en 3 dimensions et l'optique de focalisation intégrée au bout du bras du robot, délivre une longueur focale de l'ordre de 250 à 450 mm, avec une distance de travail de 290 mm à 500 mm et une zone d'interaction de l'ordre de 180 x 100 à 320 x 190 mm².

### Exemple de réalisation non couvert par la présente invention telle que définie dans les revendications

On a réalisé un soudage de pièces en acier inoxydable de nuance 304 L, avec une source à Nd-YAG à disque de 4 kW équipée d'une fibre optique de 200 µm dans les conditions suivantes d'utilisation : soudure par transparence de tôles d'épaisseur 0,9 mm, à une puissance laser de 3 kW et une vitesse de soudage de 2,9 m/min.

Conformément à l'invention, un flux d'argon liquide est injecté en mode laminaire avec une buse plate de section rectangulaire 2,5 mm x 20 mm à la surface de la tôle.

Les résultats obtenus sont totalement satisfaisants puisque sans protection gazeuse le cordon est oxydé en surface, avec un aspect irrégulier, avec l'argon froid utilisé le cordon est moins oxydé avec un aspect plus régulier.

## Revendications

1. Procédé de soudage par faisceau laser d'au moins une pièce métallique dans lequel on met en oeuvre une protection gazeuse de la zone de soudage obtenue par distribution d'argon à l'état liquide, **caractérisé en ce que**, préalablement à la distribution de l'argon liquide, on opère une étape de balayage de la zone de soudage avec de l'argon gazeux à une température comprise entre 0 C° et 60 C° de manière à chasser au moins une partie de l'air et de l'humidité ambiante au-dessus de la zone de soudage.

2. Procédé selon la revendication 1, **caractérisé en ce qu'**il s'agit d'un procédé de soudage laser à distance.

3. Procédé selon l'une des revendications 1 ou 2, **caractérisé en ce que** l'argon liquide est distribué en un flux laminaire.

4. Procédé selon l'une des revendications 1 ou 2, **caractérisé en ce que** l'argon est distribué sous forme de gouttelettes d'argon liquide.

5. Procédé selon l'une des revendications 1 à 4, **caractérisé en ce que** l'argon liquide est distribué sur et/ou autour du cordon de soudure en cours de réalisation.

6. Procédé selon l'une des revendications 1 à 5, **caractérisé en ce que** l'argon liquide est distribué par une buse plate.

7. Procédé selon l'une des revendications 1 ou 2 ou 4 à 6, **caractérisé en ce que** l'argon est distribué sous forme de gouttelettes d'argon liquide sur une portion du trajet du faisceau laser.

8. Procédé selon la revendication 1, **caractérisé en ce que** le balayage de la zone de soudage est opéré avec de l'argon gazeux
à une température comprise entre 5 C° et 40 C°.

9. Procédé selon l'une des revendications 1 à 8, **caractérisé en ce que** l'on soude plusieurs pièces métalliques et/ou au moins une partie des pièces est en acier carbone, en acier inoxydable, en aluminium ou en un de leurs alliages.

## Claims

1. Laser welding process for welding at least one metal workpiece, in which a gas shield is used for shielding the welding zone, said shield being obtained by delivering argon in the liquid state, **characterized in that**, prior to the delivery of liquid argon, a step of flushing the welding zone with gaseous argon at a temperature of between 0°C and 60°C is carried out so as to expel at least some of the air and ambient moisture above the welding zone.

2. Process according to Claim 1, **characterized in that** it is a remote laser welding process.

3. Process according to either of Claims 1 and 2, **characterized in that** the liquid argon is delivered as a laminar flow.

4. Process according to either of Claims 1 and 2, **characterized in that** the argon is delivered in the form of liquid argon droplets.

5. Process according to one of Claims 1 to 4, **characterized in that** the liquid argon is delivered on and/or around the weld bead in the course of being produced.

6. Process according to one of Claims 1 to 5, **characterized in that** the liquid argon is delivered by a flat nozzle.

7. Process according to either of Claims 1 and 2 or one of Claims 4 to 6, **characterized in that** the argon is delivered in the form of liquid argon droplets delivered over a portion of the laser beam path.

8. Process according to Claim 1, **characterized in that** the welding zone is flushed with gaseous argon at a temperature between 5°C and 40°C.

9. Process according to one of Claims 1 to 8, **characterized in that** several metal workpieces are welded and/or at least some of the workpieces are made of carbon steel, stainless steel, aluminium or one of the alloys thereof.

## Patentansprüche

1. Verfahren zum Laserstrahlschweißen mindestens eines Metallteils, in dem ein Gasschutz der Schweißzone umgesetzt wird, der mittels Verteilung von Argon in flüssigem Zustand erhalten wird, **dadurch gekennzeichnet, dass** vor der Verteilung des flüssigen Argons ein Schritt der Spülung der Schweißzone mit dem gasförmigen Argon bei einer Temperatur, die zwischen 0 °C und 60 °C liegt, vorgenommen wird, so dass mindestens ein Teil der Luft und der Umgebungsfeuchtigkeit oberhalb der Schweißzone ausgetrieben wird.

2. Verfahren nach Anspruch 1, **dadurch gekennzeichnet, dass** es sich um ein Fernlaserschweißverfahren handelt.

3. Verfahren nach einem der Ansprüche 1 oder 2, **dadurch gekennzeichnet, dass** das flüssige Argon in einer laminaren Strömung verteilt wird.

4. Verfahren nach einem der Ansprüche 1 oder 2, **dadurch gekennzeichnet, dass** das Argon in der Form von Tröpfchen von flüssigem Argon verteilt wird.

5. Verfahren nach einem der Ansprüche 1 bis 4, **dadurch gekennzeichnet, dass** das flüssige Argon im Verlauf der Durchführung auf der und/oder um die Schweißnaht herum verteilt wird.

6. Verfahren nach einem der Ansprüche 1 bis 5, **dadurch gekennzeichnet, dass** das flüssige Argon durch eine Flachdüse verteilt wird.

7. Verfahren nach einem der Ansprüche 1 oder 2 oder 4 bis 6, **dadurch gekennzeichnet, dass** das Argon in der Form von Tröpfchen von flüssigem Argon auf einem Abschnitt des Wegs des Laserstrahls verteilt wird.

8. Verfahren nach Anspruch 1, **dadurch gekennzeichnet, dass** die Spülung der Schweißzone mit dem gasförmigen Argon bei einer Temperatur, die zwischen 5 °C und 40 °C liegt, vorgenommen wird.

9. Verfahren nach einem der Ansprüche 1 bis 8, **dadurch gekennzeichnet, dass** mehrere Metallteile geschweißt werden und/oder mindestens ein Teil der Teile aus Kohlenstoffstahl, aus nicht rostendem Stahl, aus Aluminium oder aus einem von deren Legierungen hergestellt ist.
